# EUROPEAN PATENT SPECIFICATION

(11) **EP 0 595 431 B1**
(45) Date of publication and mention of the grant of the patent: **05.02.1997**
(21) Application number: 93203028.1
(22) Date of filing: 28.10.1993
(51) Int. Cl.: A01G 9/14

(54) **Automatic potted plant nursery**
Automatisierung der Züchtung von Topfpflanzen
Automatisation de la culture de plantes en pots

(30) Priority: 29.10.1992 NL 9201882
(43) Date of publication of application: 04.05.1994
(73) Proprietor: MACHINEFABRIEK FLIER B.V., NL-2991 LK Barendrecht (NL)
(72) Inventor: Flier, Lambert, NL-2992 SN Barendrecht (NL)
(74) Representative: Smulders, Theodorus A.H.J., Ir.

(56) References cited:
- FR-A- 2 582 188
- NL-A- 8 203 505
- NL-A- 8 700 172

## Description

The invention relates to an apparatus for automating potted plant nurseries, in particular the cultivation of potted plants on a concrete floor.

Cultivating potted plants on a concrete floor basically comprises the following operations. After filling (plastics) pots with soil and seed, or with seedlings (potting), the pots are set down on a concrete floor in a greenhouse, where, in order to use the available floor area as fully as possible, the pots can be arranged against each other in the configuration of a rhombus. After a first growth phase the pots need to be picked up and set down elsewhere in a more spacious relationship to enable the plants to go through a second growth phase. At that point already a division can be made into larger and smaller plants to ensure as much as possible that a lot will be suitable for auction all at the same time. Such sorting should preferably occur before the pots are set down for the second growth phase.

After the second growth phase the pots are picked up again and a selection of auction-ready material and waste can be made. It is also possible to sort the material into smaller and larger material a second time and pots can be set out again for a third growth phase, etc. This, however, is not relevant to the principle of the invention and therefore in the present description only a cultivation process in two growth phases and a sorting into 50% 'large' and 50% 'small' will be described.

So far, the operations of setting out plant pots, picking them up and setting them down elsewhere have been mechanized and automated only to a limited extent. A long narrow pot conveyor consisting of linkable sections runs from a potting machine into the greenhouse to the point where pots are to be deposited. At that point series of pots are taken off the conveyor with a fork-shaped implement and set down on the concrete floor. Similar techniques are used in picking up and setting out the pots again.

The object of the invention is to provide a far-reaching mechanization and automation of the above-described pot manipulations.

To that end, according to the invention, use is made of belt containers comprising endless belts tensioned over end pulleys bearing-mounted in a subframe, pickup carriages and setout carriages which comprise driving means for receiving and delivering belt containers and which are capable of receiving several belt containers side by side and are provided on one side with pot-pickup means and pot-setout means, respectively.

By designing the pickup carriages and setout carriages in this basic equipment with a length equal to the bay width in a given greenhouse, rows of pots of a length substantially equal to the bay width can be picked up and set out, respectively.

If the potting machine is arranged outside the greenhouse field, belt containers can be loaded, a plurality of the filled belt containers can be transferred to a setout carriage which successively discharges the belt containers and sets out the pots bay-wide. After the pots have completed the first growth phase, the pots can be loaded onto empty belt containers which have priorly been placed on a pickup carriage. Then the filled belt containers can be transferred from the pickup carriage to a setout carriage. A thus filled setout carriage can be ridden to the intended place and the pots can be set out for the second (in general, the next) growth phase.

To optimize the transport within the greenhouse field, it is possible, for the purpose of transferring belt containers from the potting station to setout carriages and from pickup carriages to setout carriages, to use, in accordance with the invention, intermediate transport carriages or shuttles, which have substantially the same design and dimensions as the pickup and setout carriages, the shuttles being preferably mobile over rails centrally through the greenhouse field. The belts of the belt containers can be selectively connectible to electric drives. The pickup and setout carriages can be provided, at the top surface thereof, with driven flange rollers or like conveying means for receiving and delivering belt containers.

For the purpose of picking up pots and placing them on a belt container which is located on a pickup carriage, the pickup carriage may comprise a lifting device with a lifting fork for gripping a row of pots at the same time, a first cross conveyor extending over the entire width of the pickup carriage and at least one second cross conveyor extending between the first cross conveyor and the relevant side of the pickup carriage, the two cross conveyors being interconnected by an intermediate conveyor at at least one end.

With this apparatus, in each instance a row of pots can be picked up off a concrete floor and be placed on the first cross conveyor. The first cross conveyor is then driven in the direction of the intermediate conveyor for transferring the pots via this intermediate conveyor to the second cross conveyor, from which they can be loaded by the same or another lifting device onto selected belt containers on the pickup carriage while the first cross conveyor is being loaded again. During the transfer of the pots from the first to the second cross conveyor, interspaced pots can be moved towards each other before they are placed onto the belt containers. Thus the surface area of the belt containers is optimally used.

For carrying out a sorting operation during the loading of the pickup carriage, so that the belt containers to be filled can be loaded selectively with larger or smaller plants, it is possible, in further elaboration of the invention, to employ in the pickup carriage a third cross conveyor between the second cross conveyor and the relevant side of the pickup carriage, the intermediate conveyor being provided with means for evaluating the passing pots and directing the pots to the second or the third cross conveyor.

Different belt containers can then be loaded with products of different sizes, for instance, and by an appropriate loading with the aid of the shuttles, setout carriages can be loaded with the same product in each case, which facilitates the setting out of different products in different bay zones.

In accordance with the invention, the setout carriages can be provided on one side thereof with a first cross conveyor, a second cross conveyor connected to the first cross conveyor by an intermediate conveyor, this second cross conveyor being located between the first cross conveyor and the relevant side of the carriage, transfer means being operative between the carriage and the second cross conveyor, the first cross conveyor comprising a push beam and a slide beam extending over the entire width of the carriage, the slide beam comprising baffles defining a series of chutes for setting out pots from the second cross conveyor at a specified interspace.

By means of the lifting means the second cross conveyor is loaded from full belt containers on the setout carriage. The pots being transferred row by row move to the first conveyor and as soon as it is filled throughout its length, the push beam is actuated and pushes a row of pots over the slide beam onto the concrete floor.

During the transfer of the pots from the second cross conveyor to the first cross conveyor the distance between the pots can be adjusted. This is of importance for pots which are being set out for the second growth phase.

The basic apparatus can be supplemented with further observing and control means for optimizing the belt container transport and for automating the various operations.

To clarify the invention, one exemplary embodiment of the apparatus for automating a potted plant nursery will now be described with reference to the accompanying drawings.
Fig. 1 is a plan of a part of a greenhouse with pots set out under different bays in a field;
Fig. 2 is a top plan view of a pickup carriage, a shuttle and a setout carriage in different loading conditions; and
Fig. 3 is a side view of a belt container.

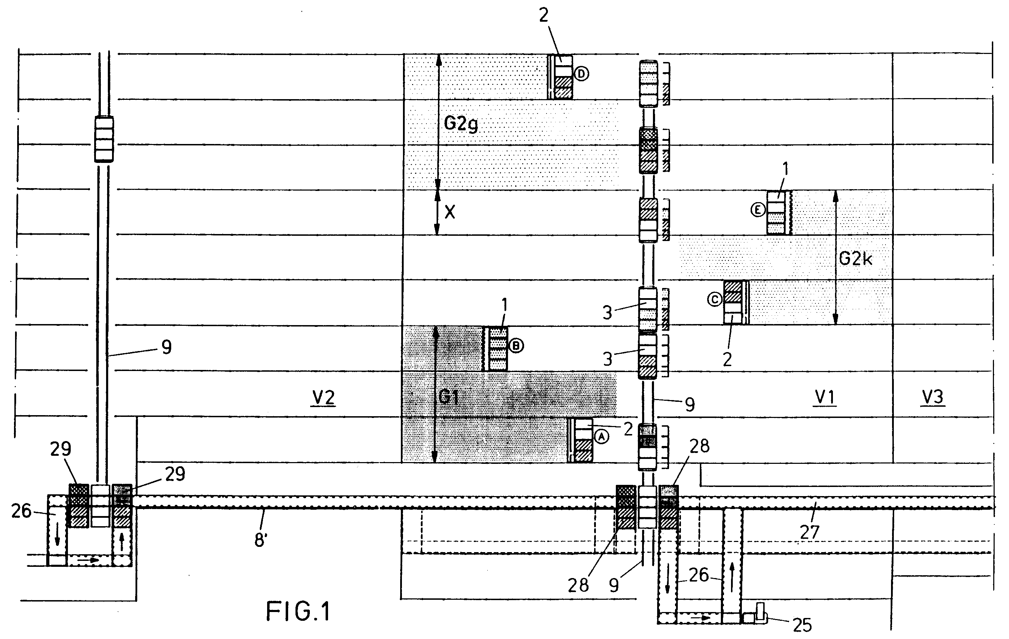

In the drawing, in particular in Fig. 1, a part of a greenhouse field V1 with adjacent fields V2 and V3 is indicated, and pickup and setout activities are depicted only in the central field V1. Further indicated are field sections G1, G2k and G2g, intended, respectively, for the first growth phase, and for the second growth phase of, respectively, smaller and larger plants from the first growth phase. Setout carriages in operation are designated by A, C and D and pickup carriages in operation are designated by B and E.

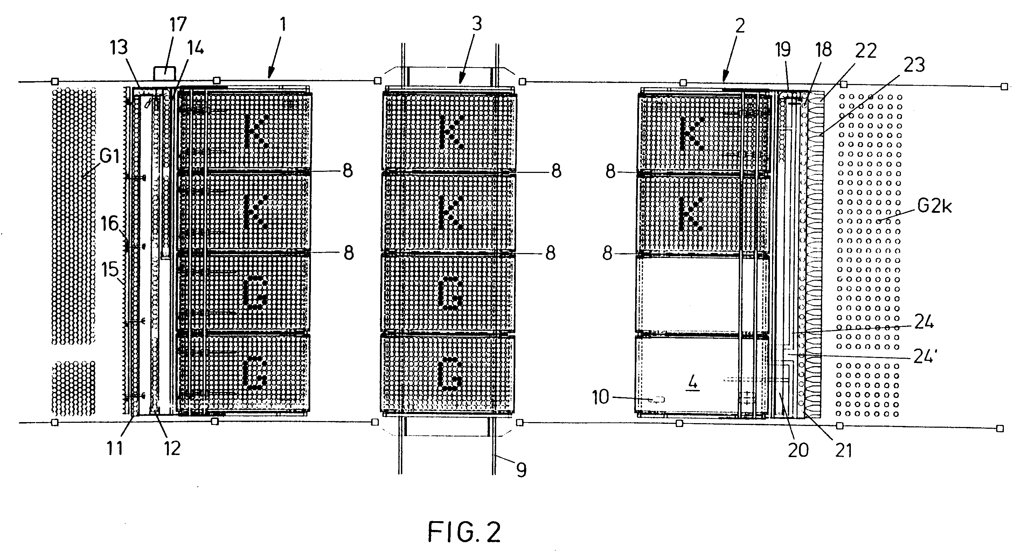

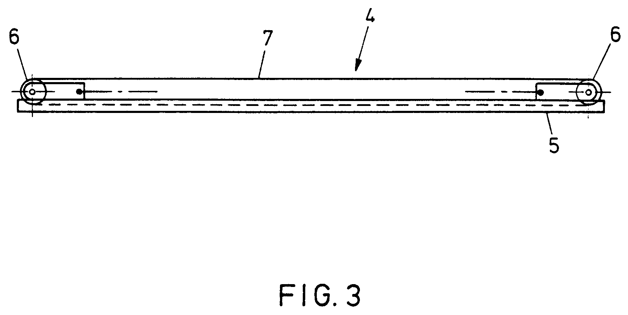

Before the activities in the field V1 are discussed in detail, reference is made to Fig. 2, where a pickup carriage 1, a setout carriage 2 and a shuttle 3 are depicted, each loaded with belt containers 4 of which a side view is depicted in Fig. 3. According to Fig. 3 a belt container 4 comprises a subframe 5 having bearing-mounted thereon end pulleys 6 for an endless belt 7 whose upper part forms a bearing surface for plant pots (not shown in Fig. 3). The upper part of the belt may further be supported by intermediate pulleys and the belt container can be connected to a drive for discharging rows of pots resting thereon.

Each of the carriages 1, 2 and 3 is provided, on the top surface thereof, with rows of driven flange rollers 8 designed for receiving side girders of the frame 7 of belt containers 4. The shuttles 3 are distinct from the carriages 1 and 2 in that the shuttles are mobile over rails 9, whilst the carriages 1 and 2 are mobile on wheels 10 in a direction transverse to the direction of the rails.

A pickup carriage 1 is provided on one side thereof with a first cross conveyor 11, a second cross conveyor 12, which is connected with the first cross conveyor 11 via an intermediate conveyor 13, and a third cross conveyor 14. Located adjacent the first cross conveyor 11 is a comb-shaped lifting fork 15 with lifting arms 16 by which the lifting fork can be moved up, rearwards, down and back again. Accordingly, after the first growth phase, pots can be gripped row by row from a field section, for instance G1, and be placed on the first cross conveyor 11. The row of pots is then conveyed by this conveyor 11 via the intermediate conveyor 13 to the conveyors 12 or 14, with larger or smaller plants being directed to one or the other conveyor 12, 14 by means of a schematically indicated evaluating device 17. By means of transfer means, for instance of the same type as the lifting fork 15, belt containers on the pickup carriages can be selectively loaded from the conveyors 12 and 14 with larger or smaller plants, which is indicated in the drawing by the letters G and K.

The setout carriage 2 likewise comprises a first cross conveyor 18 and a second cross conveyor 20 connected with the first cross conveyor 18 via an intermediate conveyor 19. Provided at the setout carriage is a slide beam 21 whose slanting upper face is divided into chutes 23 by baffles 22, the relative distance between the chutes determining the spacing of pots being set out in a field section, for instance G2k. Further, the setout carriage 2 comprises a push beam 24, by which a row of pots formed on the first cross conveyor 18 can be pushed off in its entirety over the slide beam and thus be set out. The push beam 24 can be provided with an interruption 24' at a desired point, so that in the row set out there is likewise an interruption for forming a gangway.

Belt containers loaded with pots to be set out can be connected to a drive for the purpose of transferring pots row by row onto the second cross conveyor 20, from which the first cross conveyor 18 is filled via the intermediate conveyor 19. Then by means of the push beam 24 a row of pots thus formed can be placed on the floor over the slide beam 21. The slide beam 21 can be of reciprocating design for the purpose of arranging pots in the configuration of a rhombus.

Now returning to Fig. 1 a number of pot manipulations within the framework of potted plant cultivation on concrete floors will now be elucidated.

Fig. 1 shows a potting station 25, which communicates via conveying means 26 with a corridor 27 which may extend along a number of fields V1, V2, V3, etc. The corridor may consist of a series of driven flange rollers 8', comparable with the rollers 8 on the shuttles 3 and the carriages 1 and 2.

On the corridor 27, which may comprise several storeys, there are located adjacent each field V1, V2, V3, at least one set of platforms 28 on opposite sides of the rails 9, over which the shuttles 3 can be moved. In the drawing each field V1, V2, V3 is subdivided into field sections G1, G2k and G2g, each covering several bay widths X, for instance of 6.4 m. This division, incidentally, is made only for the purpose of illustrating the invention.

Empty belt containers 4 can be supplied via the corridor 27 to the potting station 25, be filled there and be loaded onto the shuttle 3 via the platforms 28. The shuttle 3 conveys the containers into field section G1, for instance, and transfers the filled belt containers 4 onto a setout carriage 2(A) which sets out the pots in field section G1 for the first growth phase.

Also depicted in field G1 is a pickup carriage 1(B) which is engaged in picking up pots with plants that have completed the first growth phase. After the belt containers 4 located on the pickup carriage 1(B) have been filled, the carriage 1(B) rides rearwardly to the central gangway and transfers the filled belt containers 4 onto a shuttle 3 which, depending on whether pots with larger or smaller plants are involved, carries the belt containers 4 to field section G2g or field section G2k, where the pots are set down for the second growth phase by the setout carriage 2(D) or 2(C).

Although further sorting operations and further growth phases are possible, it will be assumed within the framework of the present description that after two growth phases the plants are ready for auction. The shuttle takes over from the pickup carriages 1 the belt containers 4 which have been filled from the fields G2k and G2g and carries them to a platform 28. From the platform 28 the belt containers are placed on the corridor 27 and carried to an end station 29, where the pots with plants are prepared for transportation to the auction.

## Claims

1. An apparatus for automating potted plant nurseries, in particular the cultivation of potted plants on a concrete floor, characterized by belt containers (4) comprising endless belts (7) tensioned over end pulleys (6) bearing-mounted in a subframe (5), pickup carriages (1) and setout carriages (2) which comprise driving means (8) for receiving and delivering belt containers (4) and which are capable of receiving several belt containers (4) side by side and are provided on one side with pot-pickup means (11-16) and pot-setout means (18-24), respectively.

2. An apparatus according to claim 1, characterized by intermediate transport carriages in the form of shuttles (3), which have substantially the same construction and dimensions as the pickup (1) and setout carriages (2), said shuttles (3) being preferably mobile over rails (9) centrally through the greenhouse field (V1, V2, V3).

3. An apparatus according to claim 1 or 2, characterized in that the belts (7) of the belt containers (4) are selectively connectible to drives.

4. An apparatus according to any one of the preceding claims, characterized in that the pickup (1) and setout (2) carriages, on the top surface thereof, are provided with driven flange rollers (8) or like conveying means for receiving and delivering belt containers (4).

5. An apparatus according to any one of the preceding claims, characterized in that the pickup carriage (1) comprises a lifing device (16) with a lifting fork (15) for simultaneously gripping a rows of pots, a first cross conveyor (11) extending over the entire width of the pickup carriage (1) and at least one second cross conveyor (12) extending between the first cross conveyor (11) and the relevant side of the pickup carriage (1), the two cross conveyors (11, 12) being interconnected by an intermediate conveyor (13) at at least one end.

6. An apparatus according to claim 5, characterized in that at the pickup carriage (1) a third cross conveyor (14) is arranged between the second cross conveyor (12) and the relevant side of the pickup carriage (1), the intermediate conveyor (13) being provided with means (17) for evaluating the passing pots and directing the pots to the second (12) or the third (14) cross conveyor.

7. An apparatus according to any one of the preceding claims, characterized in that the setout carriages (2), on one side thereof, are equipped with a first cross conveyor (18), a second cross conveyor (20) connected to said first cross conveyor (18) by an intermediate conveyor (19), said second cross conveyor (20) being located between the first cross conveyor (18) and the relevant side of the carriage (2), transfer means being operative between the carriage (2) and the second cross conveyor (20), the first cross conveyor (18) comprising a push beam (24) and a slanting slide beam (21) extending over the entire width of the carriage (2), said slide beam (21) comprising baffles (22) defining a series of chutes (23) for setting out pots from the first cross conveyor (18) at a specified interspace.

## Patentansprüche

1. Vorrichtung zum Automatisieren von Pflanzschulen für Topfpflanzen, insbesondere der Aufzucht von Topfpflanzen auf einem Betonboden, gekennzeichnet durch Band-Container mit Endlosbändern (7), die über in einem Untergestell (5) gelagerte Endrollen (6) gespannt sind, Aufnahmewagen (1) und Aussetzwagen (2), die Antriebseinrichtungen (8) zum Aufnehmen und Ausgeben von Band-Containern (4) aufweisen und die in der Lage sind, mehrere Band-Container (4) nebeneinander aufzunehmen, und die auf einer Seite jeweils mit einer Topf-Aufnahmeeinrichtung (11-16) und einer Topf-Aussetzeinrichtung (18-24) versehen sind.

2. Vorrichtung nach Anspruch 1, gekennzeichnet durch Zwischentransportwagen in Form von Pendelwagen (3), die im wesentlichen den gleichen Aufbau und die gleichen Abmessungen aufweisen, wie die Aufnahme- (1) und die Aussetzwagen (2), wobei die Pendelwagen (3) vorzugsweise auf Schienen (9) in der Mitte durch das Gewächshausfeld (V1, V2, V3) bewegbar sind.

3. Vorrichtung nach Anspruch 1 oder 2, dadurch gekennzeichnet, daß die Bänder (7) der Band-Container (4) selektiv mit Antriebseinrichtungen verbindbar sind.

4. Verfahren nach einem der vorhergehenden Ansprüche, dadurch gekennzeichnet, daß die Aufnahme- (1) und Aussetzwagen (2) auf ihrer Oberseite mit angetriebenen Flanschrollen oder dergleichen Fördereinrichtungen zum Aufnehmen und Ausgeben von Band-Containern (4) versehen sind.

5. Vorrichtung nach einem der vorhergehenden Ansprüche, dadurch gekennzeichnet, daß der Aufnahmewagen (1) eine Hebevorrichtung (16) mit einer Hebegabel (15) zum gleichzeitigen Greifen einer Reihe von Töpfen, einen ersten Querförderer (11), der sich über die gesamte Breite des Aufnahmewagens (1) erstreckt, und wenigstens einen zweiten Querförderer (12) aufweist, der sich zwischen dem ersten Querförderer (11) und der relevanten Seite des Aufnahmewagens (1) erstreckt, wobei die beiden Querförderer (11, 12) an wenigstens einem Ende durch einen Zwischenförderer (13) verbunden sind.

6. Vorrichtung nach Anspruch 5, dadurch gekennzeichnet, daß an dem Aufnahmewagen (1) ein dritter Querförderer (14) zwischen dem zweiten Querförderer (12) und der relevanten Seite des Aufnahmewagens (1) vorgesehen ist, wobei der Zwischenförderer (13) mit einer Einrichtung (17) zum Auswerten der durchlaufenden Töpfe und zum Leiten der Töpfe zum zweiten (12) oder dritten Querförderer (14) versehen ist.

7. Vorrichtung nach einem der vorhergehenden Ansprüche, dadurch gekennzeichnet, daß die Aussetzwagen (2) auf einer Seite mit einem ersten Querförderer (18), einem zweiten Querförderer (20), der mit dem ersten Querförderer (18) über einen Zwischenförderer (19) verbunden ist, wobei der zweite Querförderer (20) zwischen dem ersten Querförderer (18) und der relevanten Seite des Wagens (2) angeordnet ist, und einer Übergabeeinrichtung versehen sind, die zwischen dem Wagen (2) und dem zweiten Querförderer (20) betreibbar ist, wobei der erste Querförderer (18) einen Schubbalken (24) und einen geneigten Gleitbalken (21) aufweist, die sich über die gesamte Breite des Wagens (2) erstrecken, wobei der Gleitbalken (21) Ablenkbleche (22) aufweist, die eine Reihe von Rutschen (23) bilden, um Töpfe mit einem bestimmten gegenseitigen Abstand zueinander von dem ersten Querförderer (18) abzusetzen.

## Revendications

1. Appareil pour automatiser les pépinières de plantes en pots, en particulier la culture des plantes en pots sur un plancher de béton, caractérisé par des récipients (4) à courroies, comportant des courroies sans fin (7) tendues sur des poulies (6) d'extrémité montées dans des paliers dans un sous-châssis (5), des chariots (1) de prélèvement et des chariots (2) de mise en place qui comportant un dispositif d'entraînement (8) destiné à recevoir et transmettre les récipients (4) à courroies et qui peuvent recevoir plusieurs récipients (4) à courroies côte à côte et sont munis d'un côté du dispositif (11-16) de prélèvement de pots et du dispositif (18-24) de mise en place de pots.

2. Appareil selon la revendication 1, caractérisé par des chariots intermédiaires de transport sous forme de navettes (3) qui ont pratiquement la même construction et les mêmes dimensions que les chariots de prélèvement (1) et de mise en place (2), les navettes (3) étant de préférence mobiles sur des rails (9) placés au centre dans l'étendue de la serre (V1, V2, V3).

3. Appareil salon la revendication 1 ou 2, caractérisé en ce que les courroies (7) des récipients (4) peuvent être raccordées sélectivement à des dispositifs d'entraînement.

4. Appareil selon l'une quelconque des revendications précédentes caractérisé en ce que las chariots de prélèvement (1) et de mise en place (2) comportent, à leur surface supérieure, des rouleaux menés (8) à joues ou des dispositifs analogues de transport destinés à recevoir et distribuer les récipients (4) à courroies.

5. Appareil selon lune quelconque des revendications précédentes, caractérisé en ce que le chariot (1) de prélèvement possède un dispositif (16) de levage ayant une fourche (15) de levage destinée à saisir simultanément une rangée de pots un premier transporteur transversal (11) disposé sur toute la largeur du chariot (1) de prélèvement, et au moins un second transporteur transversal (12) disposé entre le premier transporteur transversal (11) et le côté correspondant du chariot (1) de prélèvement, les deux transporteurs transversaux (11, 12) étant interconnectés par un transporteur intermédiaire (13) placé à une extrémité au moins.

6. Appareil selon la revendication 5, caractérisé en ce qu'un troisième transporteur transversal (14) est disposé au niveau du chariot (1) de prélèvement, entre le second transporteur transversal (12) et le côté correspondant du chariot (1) de prélèvement, le transporteur intermédiaire (13) comportant un dispositif (17) pour l'évaluation des pots qui défilent et la direction des pots vers le second (12) ou le troisième (14) transporteur transversal.

7. Appareil selon lune quelconque des revendications précédentes, caractérisé en ce que les chariots (2) de mise en place, d'un de leurs côtés, sont équipés d'un premier transporteur transversal (18), d'un second transporteur transversal (20) raccordé au premier transporteur transversal (18) par un transporteur intermédiaire (19), le second transporteur transversal (20) étant placé entre le premier transporteur transversal (18) et le côté correspondant du chariot (2), un dispositif de transfert fonctionnant entre le chariot (2) et le second transporteur transversal (20), le premier transporteur transversal (18) comprenant une poutre (24) de poussée et une poutre inclinée (21) de coulissement disposées sur toute la largeur du chariot (2), la poutre (21) de coulissement comprenant des déflecteurs (22) délimitant une série de goulottes (23) pour la mise en place de pots du premier transporteur transversal (18) à un espacement spécifié.
